# EUROPÄISCHE PATENTSCHRIFT

(11) **EP 3 048 008 B1**
(45) Veröffentlichungstag und Bekanntmachung des Hinweises auf die Patenterteilung: **27.04.2022**
(21) Anmeldenummer: 16000068.3
(22) Anmeldetag: 13.01.2016
(51) Int. Cl.: B60P 1/44

(54) **VERFAHREN ZUM STEUERN EINER HUBLADEBÜHNE**
METHOD FOR CONTROLLING A TAIL LIFT
PROCEDE DE COMMANDE D'UN HAYON ÉLÉVATEUR

(30) Priorität: 22.01.2015 DE 102015000627
(43) Veröffentlichungstag der Anmeldung: 27.07.2016
(73) Patentinhaber: Palfinger Tail Lifts GmbH, 27777 Ganderkesee (DE)
(72) Erfinder: Popken, Uwe, 26209 Hatten (DE); Rulfs, Eike, 27804 Berne (DE)
(74) Vertreter: Möller, Friedrich

(56) Entgegenhaltungen:
- EP-A1- 1 413 476
- DE-A1- 19 804 155
- US-A1- 2007 224 025

## Beschreibung

Die Erfindung betrifft ein Verfahren zum Steuern einer eine Ladeplattform aufweisenden Hubladebühne gemäß dem Oberbegriff des Anspruchs 1.

Hubladebühnen dienen dazu, dass Be- und Entladen von Fahrzeugen mit insbesondere schweren Gegenständen zu erleichtern. Dazu verfügen die Hubladebühnen über eine vorzugsweise an der Rückseite eines Fahrzeugaufbaus schwenk-, heb- und senkbar angelengte Ladeplattform.

Zum Be- und Entladen wird die in einer ruhenden Stellung hinter dem Fahrzeugaufbau hochgeschwenkte Ladeplattform herunter geschwenkt in eine horizontale oder nahezu horizontale Schwenkposition. Durch Absenken der heruntergeklappten Ladeplattform können die zu entladenden Gegenstände vom Niveau des Fahrzeugaufbaus auf ein niedriges Niveau, insbesondere ein Bodenniveau, gebracht werden. Umgekehrt wird die Ladeplattform zum Beladen des Fahrzeugs angehoben.

Es sind außerdem sogenannte unterziehbare Hubladebühnen bekannt, die nach Gebrauch unter der Ladefläche des Fahrzeugs verstaut werden. Insbesondere sogenannte Faltplattformen werden im gefalteten Zustand unter der Ladeplattform verstaut. Dazu werden sie zunächst quer zur Fahrtrichtung des Fahrzeuges gefaltet, unter die Ladeplattform gezogen und sodann gegen Anschläge, vorzugsweise Gummipuffer, gepresst, um ein Vibrieren während der Fahrt zu vermeiden. Umgekehrt muss verhindert werden, dass die Ladeplattform nicht oder mit nicht ausreichender Anpresskraft gegen die Anschläge gefahren wird.

Das Anheben und das Schwenken als auch das Absenken und Verstauen der Ladeplattform wird üblicherweise durch das gleiche Hydrauliksystem bzw. durch die gleichen Antriebe durchgeführt. Da diese Antriebe zum Anheben von Lasten entsprechend leistungsstark sind, besteht die Gefahr, dass beim Verstauen der Ladeplattform an dem Aufbau oder unter der Ladeplattform beim Unterlassen eines rechtzeitigen Beendens des Hubwegs die Ladeplattform, das Hubwerk oder die Ladeplattform beschädigt werden. Aus US 2007/0224025 A1 und DE 198 04 155 A1 ist beispielsweise bekannt, dass während des Betriebs der Ladeplattform eine Versorgungsspannung des Antriebs gemessen wird und beim Überschreiten von vorgegebenen Spannungswerten der Antrieb abgeschaltet wird.

Z Dokument US 2007/0224025 A1 offenbart den Oberbegriff des Anspruchs 1. Ausgehend vom Vorstehenden liegt der Erfindung die Aufgabe zu Grunde, ein Verfahren zum Steuern einer Hubladebühne zu schaffen, durch das die Hubladebühne sicher betrieben werden kann.

Ein Verfahren zur Lösung dieser Aufgabe weist die Maßnahmen des Anspruchs 1 auf. Demnach ist es vorgesehen, dass die Hubladebühne in Abhängigkeit einer während des Betriebs der Hubladebühne gemessenen elektrischen Spannung des mindestens einen Antriebs gesteuert wird. Die Messung der elektrischen Spannung ermöglicht es, direkt die Last des Antriebs der Hubladebühne zu ermitteln. So ändert sich der Spannungsabfall des Antriebs mit der Last des Antriebs bzw. zu dem Gewicht das auf der Ladeplattform lastet. Übersteigt das auf die Ladeplattform wirkende Gewicht deren maximale Last, kann dies anhand einer Messung der elektrischen Spannung des Antriebs festgestellt werden und der Antrieb gegebenenfalls beendet werden. Gleichermaßen kann über Messung der elektrischen Spannung das Verstauen bzw. das Heranfahren der Ladeplattform an die Ladefläche des Fahrzeugs oder an Anschläge kontrolliert werden. Durch derartige Messung der Spannung können Schäden am Hubsystem bzw. an der Ladeplattform oder dem Fahrzeug vermieden werden. Erfindungsgemäß werden jedoch nicht nur Spannungsabfälle gemessen und ausgewertet, sondern vielmehr auch Spannungsanstiege, wie sie beispielsweise beim Absenken der Ladeplattform auf dem Untergrund auftreten können. Die Erfindung sieht es vor, dass die Hubladebühne in Abhängigkeit einer vorgebbaren relativen Abweichung einer Ist-Steigung des zeitlichen Spannungsverlaufs zu einer Soll-Steigung des zeitlichen Spannungs-verlaufs betrieben wird. Dazu werden mindestens zwei zeitlich beabstandete Spannungswerte des Antriebs gemessen. Anhand dieser Werte wird eine Steigung des Spannungsverlaufs ermittelt. Diese Steigung wird sodann mit einer vorgebbaren Soll-Steigung für den gleichen Vorgang verglichen. Weicht die gemessene Ist-Steigung von der Soll-Steigung ab, wird der Antrieb entsprechend geregelt oder gegebenenfalls gestoppt. Diese Abweichung kann ebenfalls einen gewissen Toleranzbereich aufweisen, in dem sich die Steigung bewegen kann, ohne dass es zu einem Abschalten des Antriebs kommt. Die Ermittlung bzw. der Vergleich mit einer Soll- bzw. Referenzsteigung ist unabhängig von der absoluten Spannung oder einem zu bestimmenden Spannungsreferenzwert.

Bevorzugt sieht es die Erfindung weiter vor, dass die Hubladebühne in Abhängigkeit der gemessenen elektrischen Spannung verschwenkt, abgesenkt, angehoben und/oder gestoppt wird. Die Abhängigkeit der Steuerung der Hubladebühne beschränkt sich nicht nur auf das Verstauen der Ladeplattform, sondern kann vielmehr auch auf den gesamten Betrieb der Hubladebühne angewandt werden. Durch Messung der Spannung kann ein direktes Feedback über die direkte und auch indirekte Belastung der Hubladebühne erhalten werden.

Insbesondere kann es die Erfindung weiter vorsehen, dass die Hubladebühne bzw. der Antrieb gestoppt wird, wenn eine vorgebbare relative Änderung des Spannungswertes überschritten wird. Dazu wird der Spannungswert nach Einschalten des Antriebes und nach Abklingen der durch das Einschalten des Antriebs entstehenden Spannungsspitzen als Referenzwert genommen. Dieser Referenzwert wird für die weitere Steuerung als Referenzmittel für die Spannung genommen. Es ist jedoch auch denkbar, dass diese Referenz während des Betriebs des Antriebs regelmäßig aktualisiert wird. Dadurch, dass der Referenzwert mit jedem Einschalten des Antriebs bzw. während des Betriebs regelmäßig neu definiert wird, ist das Verfahren unabhängig von dem absoluten Spannungswert bzw. von dem Ladezustand der Batterie.

Die vorzugebene relative Änderung bzgl. der Referenzspannung kann durch die Bedienperson eingestellt werden. Je nach Anwendung kann sie bis zu 10 %, bzw. 5 % bis 10 %, oder sogar mehr als 10% betragen. Wenn sich die Änderungen der Spannung innerhalb dieses durch die Referenzspannung und die relative Änderung vorgegebene Toleranzbereich bewegt, wird der Antrieb nicht gestoppt. In diesem Fall bewegt sich der Antrieb gleichmäßig und ohne eine sich ändernde Last. Sobald die Hubladebühne beispielsweise gegen einen Gummipuffer fährt ändert sich die gemessene Spannung rasch und signifikant und übersteigt die maximal zulässige Änderung relativ zu der Referenzspannung. Es folgt ein Abschalten des Antriebs.

Die Erfindung kann es weiter vorsehen, dass die Hubladebühne in Abhängigkeit einer gemessenen Spannungscharakteristik des Antriebs der Hubladebühne betrieben wird, wobei die Spannungscharakteristik mit vorgegebenen, insbesondere gespeicherten Spannungscharakteristiken verglichen wird und den vorgegebenen Spannungscharakteristiken entsprechend, der Antrieb der Hubladebühne gesteuert wird. So weist beispielsweise das Anfahren insbesondere der Ladeplattform an Endpositionen charakteristische Spannungsverläufe auf. Derartige Spannungscharakteristiken werden für verschiedenste Bewegungen der Hubladebühne aufgenommen und gespeichert. Beim Durchführen dieser Bewegungen wird die Spannung über die gesamte Zeit der Bewegung gemessen und mit der Referenzspannungscharakteristik verglichen. Weicht die aufgenommene Spannungscharakteristik signifikant von der Referenzcharakteristik ab, wird der Antrieb automatisch gestoppt. Auch für die gemessene Spannungscharakteristik sieht es die Erfindung vor, einen Toleranzbereich zu definieren, in dem sich Abweichungen bewegen können. Durch diese abgespeicherte Spannungscharakteristik lassen sich komplexe Bewegungen einer Hubladebühne, insbesondere ihrer Ladeplattform überprüfen sowie steuern.

Die Erfindung sieht es weiter besonderes bevorzugt vor, dass der Antrieb durch eine Steuereinheit, die den Spannungswert bzw. die Ist-Steigung des Spannungsverlaufs bzw. die gemessene Spannungscharakteristik mit den vorgegebenen, insbesondere gespeicherten, Werten bzw. Spannungscharakteristiken vergleicht, gesteuert wird, vorzugsweise während die Spannung des Antriebs gemessen wird. Diese Steuereinheit kann dem Antrieb zugeordnet sein und weist sowohl ein Spannungsmesssytem, einen Speicher für gemessene und vorgegebene Werte sowie eine Steuerung für den Antrieb auf. Über Bedienelemente lassen sich Betriebsparameter wie beispielsweise relative Änderungen oder Toleranzbereiche eingeben. Die Steuereinheit misst die Spannung des Antriebs während des Betriebs und vergleicht diese simultan mit Spannungs- bzw. Referenzwerten. Es findet somit eine permanente Rückkopplung zwischen Messung und Steuerung statt. Gegebenenfalls kann die Steuereinheit die gemessenen Spannungswerte für Dokumentationszwecke speichern.

Die Erfindung kann es außerdem vorsehen, dass die Spannungsänderung beim Einschalten des Antriebs ausgeblendet wird, insbesondere für den Vergleich mit einem Soll-Wert nicht berücksichtigt wird. Vor allem beim Einschalten des Antriebs treten Spannungsspitzen auf, die für die Auswertung der Spannungswerte nicht zu verwerten bzw. unerheblich sind. Daher werden diese Werte von der Steuereinheit automatisch ausgeblendet bzw. herausgefiltert, also nicht berücksichtigt.

Weiter besteht ein Aspekt der Erfindung darin, dass durch gemessene Spannungswerte bzw. Ist-Steigungen bzw. Spannungscharakteristiken, denen keine gespeicherten Werte bzw. Spannungscharakteristiken zugeordnet werden der Betrieb der Hubladebühne unterbrochen oder ein Warnsignal erzeugt wird. Dies erweist sich als besonders vorteilhaft für den Fall, dass Ware von der Hubladebühne gefallen ist, ein Defekt aufgetreten ist und/oder Personen eingeklemmt wurden.

Insbesondere sieht es die Erfindung weiter vor, dass die Spannung des Antriebs der Hubladebühne kontinuierlich und zwar fortlaufend oder in regelmäßigen zeitlichen Abständen gemessen wird, vorzugsweise nur wenn der Antrieb in Betrieb ist. So ist es besonders für kleine Hubwege oder kurze Bewegungsabläufe der Hubladebühne vorteilhaft, wenn möglichst viele Spannungswerte ermittelt werden. Andererseits muss eine lange gleichmäßige Bewegung der Hubladebühne weniger oft durch Messung der Spannung überprüft werden. Für einen manuellen Betrieb der Hubladebühne ist es denkbar, dass die Steuereinheit abgeschaltet oder insbesondere überbrückt werden kann. Insbesondere für den Fall einer Störung, kann die Hubladebühne dann zumindest kurzzeitig auch manuell bedient werden.

Für den Fall, dass die Hubladebühne unterschiedliche Bewegungen durchführen soll, sieht es die Erfindung vor, dass verschiedene zu den unterschiedlichen Bewegungen gehörende Spannungscharakteristiken auf der Steuereinheit gespeichert werden.

Ein bevorzugtes Ausführungsbeispiel des erfindungsgemäßen Verfahrens wird nachfolgend anhand der Zeichnung näher erläutert. In dieser zeigen:
- Fig. 1: eine Seitenansicht einer unter einem rückwertigen Bereich eines teilweise dargestellten Fahrzeugs angeordneten Hubladebühne in der Ruhestellung,
- Fig. 2: die Hubladebühne der Fig. 1 in abgesenktem Zustand,
- Fig. 3: die Hubladebühne der Fig. 1 und Fig. 2 in der Gebrauchsstellung bei vollständig ausgefalteter Ladeplattform, und
- Fig. 4: eine Spannungscharakteristik des Antriebs.

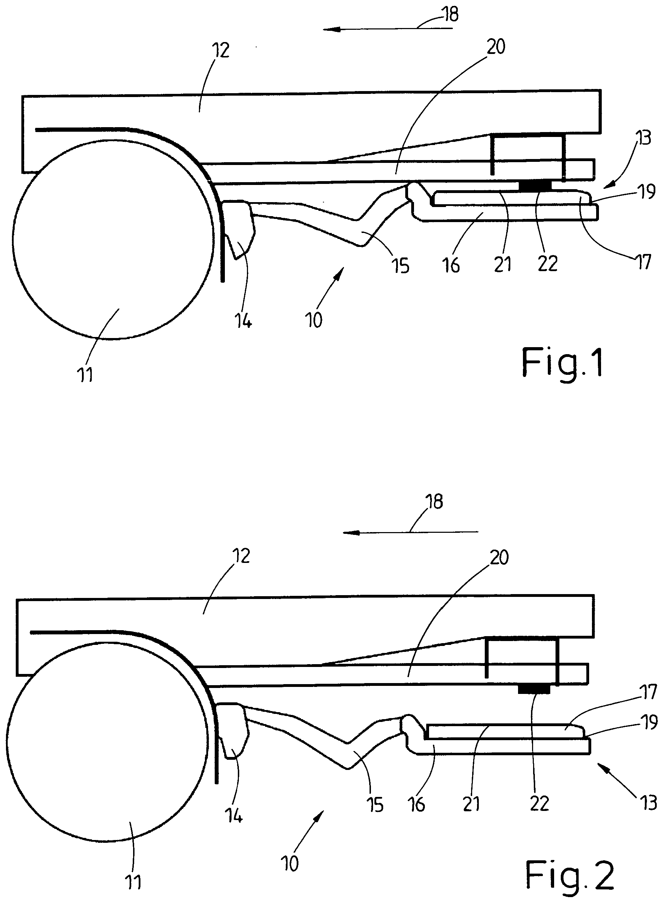

Bei der in den Figuren gezeigten Hubladebühne 10 handelt es sich um eine sogenannte unterfaltbare Hubladebühne 10. Die Hubladebühne 10 ist einem rückwertigen Bereich eines teilweise und schematisch dargestellten Fahrzeugs zugeordnet. Dabei befindet sich die Hubladebühne 10 in einem gegenüber den Hinterrädern 11 nach hinten überstehenden Bereich des Aufbaus 12 des Fahrzeugs. Bei Nichtgebrauch der Hubladebühne 10 ist diese eingefaltet, so dass sie sich vollständig unter dem rückwärtigen Teil des Aufbaus 12 des Fahrzeugs befindet (Fig. 1). Diese zusammengefaltete und verstaute Stellung der Hubladebühne 10 entspricht somit ihrer Ruhestellung.

Die Hubladebühne 10 wird im Wesentlichen aus einer Ladeplattform 13 und einem Hubwerk 14, welches hier nur schematisiert dargestellt ist, gebildet. Die Ladeplattform 13 ist im gezeigten Ausführungsbeispiel zweiteilig ausgebildet. Dadurch besteht die Ladeplattform aus einem mit dem Hubwerk 14 bzw. mit Hubschwingen 15 verbundenen hinteren Ladeplattformteil 16 und einem vorderen Ladeplattformteil 17. Beide Ladeplattformteile 16, 17 sind mittels einer quer zur Fahrtrichtung 18 sich erstreckenden Scharnierachse 19 schwenkbar miteinander verbunden. Das vordere Ladeplattformteil 17 ist gegenüber dem mit dem Hubwerk 14 verbundenen hinteren Ladeplattformteil frei verschwenkbar, und zwar um 180°. In der in Fig. 1 gezeigten Ruhestellung ist das vordere Ladeplattformteil 17 über das hintere Ladeplattformteil 16 geschwenkt. So ist die Länge der Ladeplattform 13 auf etwa die Hälfte reduziert. Dadurch lässt sich die Hubladebühne 10 mit der eingefalteten Ladeplattform 13 unter dem gegenüber den Hinterrädern 11 nach hinten überstehenden Bereich des Fahrgestellträgers 20 und des Aufbaus 12 des Fahrzeugs verstauen, wenn die Hubladebühne 10 sich in der Ruhestellung befindet.

Dem Hubwerk 14 ist ein nichtdargestellter Antrieb zum Bewegen der Ladeplattform 13 zugeordnet. Bei diesem Antrieb kann sich beispielsweise um einen hydraulischen Antrieb handeln mit mindestens einem Hubzylinder und mindestens einem Schwenkzylinder, wobei ein Hydraulikaggregat durch einen Elektromotor angetrieben wird. Alternativ kann es sich bei dem Antrieb auch um einen elektrischen Antrieb handeln mit durch einen Elektromotor angetriebenen Lineartrieben zum Verschwenken einerseits und zum Heben/Senken andererseits. Die Elektromotoren sind direkt den zum Beispiel als Gewindespindeln ausgebildeten Linearantrieben zugeordnet. Die Antriebe sind in beiden Fällen die Elektromotoren, die gemäß dem erfinderischen Verfahren gesteuert werden.

In der in Fig. 1 dargestellten Ruhestellung der Hubladebühne 10 ist eine Unterseite 21 des vorderen Ladeplattformteils 17 gegen einen Anschlag 22 gepresst. Bei diesem Anschlag kann es sich beispielsweise um einen Gummipuffer handeln. Der Anschlag 22 dient dazu, dass die Hubladebühne 10 beim Fahren des Fahrzeugs nicht vibriert. Der Anschlag 22 ist in dem dargestellten Ausführungsbeispiel fest mit dem Fahrgestellträger 20 verbunden.

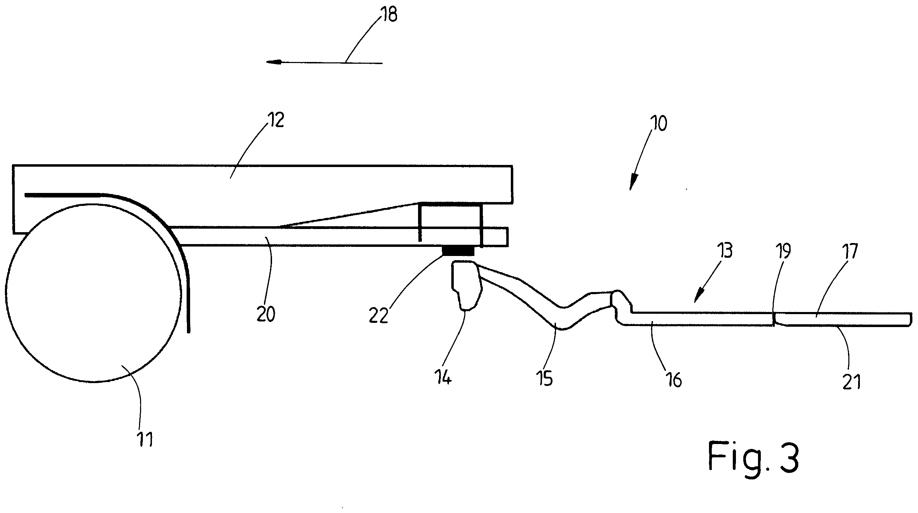

Für das Bewegen der Hubladebühne 10 in eine Gebrauchsstellung wird die zusammengeklappte Ladeplattform 13 mitsamt der Hubschwingen 15 zunächst abgesenkt, so dass die Unterseite 21 des vorderen Ladeplattformteils 17 den Kontakt mit dem Anschlag 22 aufgibt (Fig. 2). Sodann wird die gesamte Hubladebühne 10 mitsamt Hubwerk 14 und Hubschwingen 15 entgegen der Fahrtrichtung 18 nach hinten verfahren. Gleichzeitig wird die Ladeplattform 13 derart aufgeschwenkt, dass das hintere Ladeplattformteil 16 und das vordere Ladeplattformteil 17 eine gemeinsame, parallele Oberfläche bilden (Fig. 3). Für das Verfahren der Hubladebühne 10 in die Ruhestellung erfolgt der umgekehrte Vorgang.

Insbesondere beim Heranfahren der zusammengeklappten Ladeplattform 13 an den Anschlag 22 wird die Spannung eines nicht dargestellten Antriebs der Hubladebühne 10 gemessen. Beim Heranfahren der Ladeplattform 13 an den Anschlag 22 verhält sich die Spannung konstant. Sobald die Unterseite 21 des vorderen Ladeplattformteils 17 mit dem Anschlag 22 Kontakt aufnimmt, verändert sich der Spannungswert schlagartig. Diese Änderung der Spannung wird durch eine Steuereinheit analysiert und bewirkt, dass der Antrieb der Hubladebühne 10 gestoppt wird. Dadurch wird eine Beschädigung der Hubladebühne 10 bzw. des Fahrgestellträgers 20 vermieden.

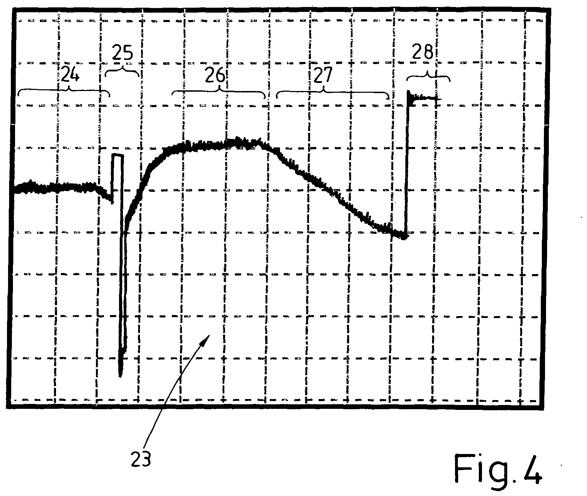

Die beispielhaft dargestellte Spannungscharakteristik 23 der Fig. 4 zeigt den zeitlichen Verlauf der Spannung beim Verstauen der Hubladebühne 10 unter dem Fahrgestellträger 20. Der erste Bereich 24 stellt dem Spannungsmesswert vor dem Start des Antriebs dar. Mit dem Start des Antriebs bricht die Spannung zunächst ein (zweiter Bereich 25). Dieser zweite Bereich 25 der Spannungscharakteristik 23 wird für die Analyse der Spannung ausgeblendet. Sobald sich die Spannung eingependelt hat, verhält sich die Spannung wieder konstant (dritter Bereich 26). Der Bereich 26 zeigt den Spannungsverlauf während des unbelasteten Anhebens der Hubladebühne 10. Dieser Spannungswert wird als Referenzwert für die weitere Steuerung der Hubladebühne 10 verwendet. Sobald die Unterseite 21 des vorderen Ladeplattformteils 17 gegen den Anschlag 22 stößt nimmt die Last des Antriebs zu, was sich in einer Änderung der Spannung wiederspiegelt (vierter Bereich 27). Sobald die Spannung im vierten Bereich 27 einen gewissen Spannungswert, der relativ zu der Referenzspannung des dritten Bereichs 26 festgelegt wird, erreicht hat, wird der Antrieb abgeschaltet (fünfter Bereich 28). Dieser Schwellenwert kann an der Steuereinheit durch den Bediener frei gewählt werden bzw. für verschiedene Anwendungen unterschiedlich gesetzt werden.

Die Erfindung sieht es außerdem vor, das alternativ die Steigung der Spannungskurve im vierten Bereich 27 ermittelt wird um mit einer Referenzsteigung verglichen wird. Des Weiteren sieht es die Erfindung vor, dass die gesamte Spannungscharakteristik 23 mit einer Referenzspannungscharakteristik vergleichen wird und die Bewegung der Hubladebühne 10 dementsprechend gesteuert wird.

Derartige Steuerung der Hubladebühne 10 ist nicht auf den Prozess des Verstauens eingeschränkt, sondern lässt sich vielmehr auf alle Betriebsmodi der Hubladebühne 10 anwenden.

Desweiteren ist das erfindungsgemäße Verfahren auch für nicht dargestellte Hubladebühnen mit einteiligen Ladeplattformen, die in Nichtgebrauchsstellung etwa senkrecht hinter dem Fahrzeugaufbau hochgeschwenkt werden, anwendbar. Hier werden nach dem Prinzip des zuvor geschilderten Verfahrens vor allem das Anfahren von Endpositionen wie die Nichtgebrauchsstellung, sowie eine Verladestellung, bei der die Ladeplattform beispielsweise gegen die Ladefläche des Fahrzeuges gefahren wird bzw. auf dem Boden abgesetzt wird, gesteuert.

### Bezugszeichenliste:

- 10: Hubladebühne
- 11: Hinterrad
- 12: Aufbau
- 13: Ladeplattform
- 14: Hubwerk
- 15: Hubschwinge
- 16: hinteres Ladeplattformteil
- 17: vorderes Ladeplattformteil
- 18: Fahrtrichtung
- 19: Scharnierachse
- 20: Fahrgestellträger
- 21: Unterseite
- 22: Anschlag
- 23: Spannungscharakteristik
- 24: erster Bereich
- 25: zweiter Bereich
- 26: dritter Bereich
- 27: vierter Bereich
- 28: fünfter Bereich

## Patentansprüche

1. Verfahren zum Steuern einer eine Ladeplattform (13) aufweisenden Hubladebühne (10), wobei die Ladeplattform (13) durch mindestens einen Antrieb sowohl verschwenkt als auch abgesenkt oder angehoben werden kann und die Hubladebühne (10) in Abhängigkeit einer während des Betriebs der Hubladebühne (10) gemessenen elektrischen Spannung des mindestens einen Antriebs gesteuert wird, **dadurch gekennzeichnet, dass** die Hubladebühne (10) in Abhängigkeit einer vorgebbaren relativen Abweichung einer Ist-Steigung des zeitlichen Spannungsverlaufs zu einer Soll-Steigung des zeitlichen Spannungsverlaufs betrieben wird.

2. Verfahren nach Anspruch 1, **dadurch gekennzeichnet, dass** die Hubladebühne (10) in Abhängigkeit der gemessenen elektrischen Spannung verschwenkt, abgesenkt, angehoben und/oder gestoppt wird,

3. Verfahren nach Anspruch 1 oder 2, **dadurch gekennzeichnet, dass** die Hubladebühne (10) gestoppt wird, wenn eine vorgebbare relative Änderung des Spannungswertes überschritten wird.

4. Verfahren nach einem der vorherigen Ansprüche, **dadurch gekennzeichnet, dass** die Hubladebühne (10) in Abhängigkeit einer gemessenen Spannungscharakteristik (23) des Antriebs der Hubladebühne (10) betrieben wird, wobei die Spannungscharakteristik (23) mit vorgegebenen, insbesondere gespeicherten Spannungscharakteristiken (23) verglichen wird und den vorgegebenen Spannungscharakteristiken (23) entsprechend der Antrieb der Hubladebühne (10) gesteuert wird.

5. Verfahren nach einem der vorherigen Ansprüche, **dadurch gekennzeichnet, dass** der Antrieb durch eine Steuereinheit, die den Spannungswert bzw. die Ist-Steigung bzw. die gemessene Spannungscharakteristik (23) mit den vorgegebenen, insbesondere gespeicherten Werten bzw. Spannungscharakteristik (23) vergleicht, gesteuert wird, insbesondere während die Spannung des Antriebs gemessen wird.

6. Verfahren nach einem der vorherigen Ansprüche, **dadurch gekennzeichnet, dass** die Spannungsänderung beim Einschalten des Antriebs ausgeblendet wird, insbesondere für den Vergleich, mit einem Soll-Wert nicht berücksichtigt wird.

7. Verfahren nach einem der vorherigen Ansprüche, **dadurch gekennzeichnet, dass** durch gemessene Spannungswerte bzw. Ist-Steigungen bzw. Spannungscharakteristiken (23), denen keine gespeicherten Werte bzw. Spannungscharakteristiken (23) zugeordnet werden können, ein Warnsignal erzeugt wird, insbesondere der Betrieb der Hubladebühne (10) unterbrochen wird.

8. Verfahren nach einem der vorherigen Ansprüche, **dadurch gekennzeichnet, dass** die Spannung des Antriebs der Hubladebühne (10) durch die Steuereinheit kontinuierlich gemessen wird oder taktweise, vorzugsweise nur wenn der Antrieb in Betrieb ist, insbesondere die Steuereinheit für einen manuellen Betrieb der Hubladebühne (10) abgeschaltet, insbesondere überbrückt wird.

9. Verfahren nach einem der vorherigen Ansprüche, **dadurch gekennzeichnet, dass** der Steuereinheit für weitere Betriebsarten der Hubladebühne (10) weitere Spannungscharakteristiken (23) aufgespielt werden.

## Claims

1. Method for controlling a tail lift (10) which has a loading platform (13), wherein the loading platform (13) can be both pivoted and also lowered or raised by means of at least one drive, and the tail lift (10) is controlled in a manner dependent on an electrical voltage of the at least one drive, which electrical voltage is measured during the operation of the tail lift (10), **characterized in that** the tail lift (10) is operated in a manner dependent on a specifiable relative deviation between an actual gradient of the voltage profile with respect to time and a setpoint gradient of the voltage profile with respect to time.

2. Method according to Claim 1, **characterized in that** the tail lift (10) is pivoted, lowered, raised and/or stopped in a manner dependent on the measured electrical voltage.

3. Method according to Claim 1 or 2, **characterized in that** the tail lift (10) is stopped if a specifiable relative change in the voltage value is overshot.

4. Method according to any one of the preceding claims, **characterized in that** the tail lift (10) is operated in a manner dependent on a measured voltage characteristic (23) of the drive of the tail lift (10), wherein the voltage characteristic (23) is compared with specified, in particular stored voltage characteristics (23), and the drive of the tail lift (10) is controlled in accordance with the specified voltage characteristics (23) .

5. Method according to any one of the preceding claims, **characterized in that** the drive is controlled by means of a control unit that compares the voltage value or the actual gradient or the measured voltage characteristic (23) with the specified, in particular stored values or voltage characteristic (23), in particular while the voltage of the drive is being measured.

6. Method according to any one of the preceding claims, **characterized in that** the change in voltage upon the activation of the drive is disregarded, in particular is not taken into consideration for the comparison with a setpoint value.

7. Method according to any one of the preceding claims, **characterized in that**, if measured voltage values or actual gradients or voltage characteristics (23) are encountered to which no stored values or voltage characteristics (23) can be assigned, a warning signal is generated, and in particular the operation of the tail lift (10) is interrupted.

8. Method according to any one of the preceding claims, **characterized in that** the voltage of the drive of the tail lift (10) is measured by the control unit continuously or cyclically, preferably only when the drive is in operation, and in particular, the control unit is deactivated, in particular bypassed, for manual operation of the tail lift (10).

9. Method according to any one of the preceding claims, **characterized in that** further voltage characteristics (23) can be loaded onto the control unit for further operating modes of the tail lift (10).

## Revendications

1. Procédé de commande d'un hayon élévateur (10) présentant une plateforme de chargement (13), la plateforme de chargement (13) pouvant être aussi bien basculée que descendue ou montée par au moins un dispositif d'entraînement, et le hayon élévateur (10) étant commandé en fonction d'une tension électrique du au moins un dispositif d'entraînement, mesurée pendant le fonctionnement du hayon élévateur (10),
**caractérisé en ce que** le hayon élévateur (10) est actionné en fonction d'un écart relatif prédéfinissable d'une pente réelle de la courbe de tension dans le temps par rapport à une pente théorique de la courbe de tension dans le temps.

2. Procédé selon la revendication 1, **caractérisé en ce que** le hayon élévateur (10) est basculé, descendu, monté et/ou arrêté en fonction de la tension électrique mesurée.

3. Procédé selon la revendication 1 ou 2, **caractérisé en ce que** le hayon élévateur (10) est arrêté lorsqu'une variation relative prédéfinissable de la valeur de tension est dépassée.

4. Procédé selon l'une quelconque des revendications précédentes, **caractérisé en ce que** le hayon élévateur (10) est actionné en fonction d'une caractéristique de tension (23) mesurée du dispositif d'entraînement du hayon élévateur (10), la caractéristique de tension (23) étant comparée avec des caractéristiques de tension (23) prédéfinies, en particulier mémorisées, et le dispositif d'entraînement du hayon élévateur (10) étant commandé selon les caractéristiques de tension (23) prédéfinies.

5. Procédé selon l'une quelconque des revendications précédentes, **caractérisé en ce que** le dispositif d'entraînement est commandé par une unité de commande qui compare la valeur de tension ou la pente réelle ou la caractéristique de tension mesurée (23) avec les valeurs ou la caractéristique de tension (23) prédéfinies, en particulier mémorisées, en particulier pendant que la tension du dispositif d'entraînement est mesurée.

6. Procédé selon l'une quelconque des revendications précédentes, **caractérisé en ce que** la variation de tension est supprimée lorsque le dispositif d'entraînement est activé, en particulier qu'elle n'est pas prise en compte pour la comparaison avec une valeur théorique.

7. Procédé selon l'une quelconque des revendications précédentes, **caractérisé en ce qu'**un signal d'alarme est généré par des valeurs de tension ou des pentes réelles ou des caractéristiques de tension (23) mesurées auxquelles aucune valeur ou caractéristique de tension (23) mémorisée ne peut être associée, en particulier que le fonctionnement du hayon élévateur (10) est interrompu.

8. Procédé selon l'une quelconque des revendications précédentes, **caractérisé en ce que** la tension du dispositif d'entraînement du hayon élévateur (10) est mesurée par l'unité de commande en continu ou de façon cyclique, de préférence uniquement lorsque le dispositif d'entraînement fonctionne, en particulier que l'unité de commande est désactivée, en particulier shuntée, pour un fonctionnement manuel du hayon élévateur (10).

9. Procédé selon l'une quelconque des revendications précédentes, **caractérisé en ce que** d'autres caractéristiques de tension (23) sont chargées sur l'unité de commande pour d'autres modes de fonctionnement du hayon élévateur (10).
